# EUROPÄISCHE PATENTSCHRIFT

(11) **EP 1 942 544 B1**
(45) Veröffentlichungstag und Bekanntmachung des Hinweises auf die Patenterteilung: **03.12.2008**
(21) Anmeldenummer: 06026239.1
(22) Anmeldetag: 18.12.2006
(51) Int. Cl.: H01M 8/24, H01M 8/04

(54) **Brennstoffzellenvorrichtung mit mehreren Kaskadenstufen**
Fuel cell device with several cascade steps
Dispositif de cellules de combustible doté de plusieurs étapes en cascade

(43) Veröffentlichungstag der Anmeldung: 09.07.2008
(73) Patentinhaber: SIEMENS AKTIENGESELLSCHAFT, 80333 München (DE)
(72) Erfinder: Stühler, Walter, 96114 Hirschaid (DE); Voitlein, Ottmar, 91475 Lonnerstadt (DE)

(56) Entgegenhaltungen:
- EP-A- 1 507 302
- EP-A- 1 746 678
- EP-A1- 1 577 972
- WO-A1-02/27849

## Beschreibung

Die Erfindung betrifft eine Brennstoffzellenvorrichtung mit mehreren Kaskadenstufen und einer von einer vorhergehenden Kaskadenstufe zu zumindest einer nachfolgenden Kaskadenstufe geführten Gaszuführung für ein Betriebsgas, die zumindest teilweise mit einer Wasserabführung zum Abführen von Wasser aus der vorhergehenden Kaskadenstufe gemeinsam geführt ist.

Bei größeren Brennstoffzellenvorrichtungen ist die gute Ausnutzung von Betriebsgas, das neben den reagierenden Bestandteilen auch inerte Gasanteile aufweist, die an den Membranen nicht verbraucht werden und deshalb aus der Brennstoffzellenvorrichtung entfernt werden müssen, von großer Bedeutung. Hierzu hat sich eine sogenannte Kaskadierung gut bewährt, bei der das jeweilige Betriebsgas nacheinander mehrere Kaskadenstufen durchströmt, die eine abnehmende Zahl von parallel geschalteten Gasräumen bzw. Brennstoffzellen aufweisen. In der letzten Kaskadenstufe, die üblicherweise aus einer oder mehrerer sogenannter Spülzellen besteht, ist die Inertgaskonzentration am höchsten. Steigt die Inertgaskonzentration über einen vorgegebenen Wert, so werden diese Spülzellen von Betriebsgas durchströmt und das Inertgas wird durch ein Ventil ausgetragen.

Innerhalb der Kaskadenstufen entsteht durch die Reaktion von Wasserstoff (H₂) und Sauerstoff (O₂) an den Elektrolyten Produktwasser, das - zusammen mit auskondensiertem Befeuchtungswasser - aus der Kaskadenstufe ausgetragen werden muss. Hierzu umfasst jede Kaskadenstufe eine Wasserabführung, die in einen Wasserabscheider mündet, in dem das Wasser gesammelt wird. Zum Austragen des Wassers aus den Kaskadenstufen wird die Wasserabführung zusätzlich von dem Betriebsgas durchströmt, das das Wasser aus der Kaskadenstufe mitnimmt und zum Wasserabscheider bläst.

Bei einem großen Lastsprung von einer niedrigen Last zu einer hohen Last durchströmt ein in seiner Stärke schnell ansteigender Gasstrom die Kaskadenstufen. Hierdurch wird auch der Wasseraustrag aus einer Kaskadenstufe in Richtung zum Wasserabscheider verstärkt. Hierbei kann es vorkommen, dass so viel Wasser aus der Kaskadenstufe ausgetragen wird, dass die Leitung, die die Kaskadenstufe mit dem Wasserabscheider verbindet und durch die zusätzlich zu dem Wasser Betriebsgas zur Aufrechterhaltung des Betriebs der nachfolgenden Kaskadenstufen strömt, vollständig mit Wasser gefüllt ist, so dass der Strom von Betriebsgas gestört ist. Dies führt zu einem Druckeinbruch in den nachfolgenden Kaskadenstufen. Besonders ausgeprägt ist dieser Effekt bei den Spülzellen, bei denen der Druckeinbruch bis zu einem Abschalten durch Zellspannungsalarm führen kann. Um eine solche Unregelmäßigkeit im Betrieb der Brennstoffzellenvorrichtung zu vermeiden, wird eine Brennstoffzellenvorrichtung nur mit einem unkritischen, maximalen Lastanstieg betrieben.

Es ist die Aufgabe der vorliegenden Erfindung, eine Brennstoffzellenvorrichtung mit mehreren Kaskadenstufen anzugeben, die auch bei einem starken Lastsprung zuverlässig betrieben werden kann.

Diese Aufgabe wird gelöst durch eine Brennstoffzellenvorrichtung der eingangs genannten Art, die erfindungsgemäß eine zusätzliche, die Wasserabführung umgehende Zusatzgaszuführung für das gleiche Betriebsgas zu zumindest der der vorhergehenden Kaskadenstufe nachfolgenden und der übernächsten Kaskadenstufe vorhergehenden nächsten Kaskadenstufe aufweist. Durch die zusätzliche Zuführung von Betriebsgas zu nachfolgenden Kaskadenstufen werden diese - auch bei einem Lastwechsel und gegebenenfalls gerade dann - effektiv mit Betriebsgas versorgt, wodurch ein Lastwechsel mit einer hohen Dynamik ermöglicht wird. Außerdem können die Brennstoffzellen der Kaskadenstufen geschont werden, da bei einer Lastversorgung keine Unterversorgung auftritt, die mit einer Strapazierung der Brennstoffzellen verbunden ist. Ein unerwünscht hoher Spannungsabfall und eine damit verbundene Betriebsstörung kann zuverlässig vermieden werden. Als zusätzlicher Vorteil kann der Wassertransport in den nachfolgenden Kaskadenstufen durch den kurzzeitig erhöhten Druck des diese Kaskadenstufen durchströmenden Betriebsgases forciert und das Wasser somit schnell und effektiv ausgetragen werden. Zusätzlich kann das Überlastverhalten der Brennstoffzellenvorrichtung verbessert werden.

Eine Reihenfolge der Kaskadenstufen von einer Kaskadenstufe zu einer nachfolgenden Kaskadenstufe ergibt sich aus der Betriebsgasführung, wobei die Kaskadenstufen für die beiden verschiedenen Betriebsgase unterschiedlich sein können. Die zumindest eine nachfolgende Kaskadenstufe, zu der das gleiche Betriebsgas durch die Zusatzgaszuführung geleitet wird, kann irgendeine Kaskadenstufe nach derjenigen Kaskadenstufe sein, die die Wasserabführung aufweist. Zweckmäßigerweise ist die Zusatzgaszuführung zu der Gaszuführung zuschaltbar, wobei unter einem Zuschalten ein Öffnen der Zusatzgaszuführung, beispielsweise durch ein Öffnen eines Ventils, verstanden werden kann.

In einer vorteilhaften Ausgestaltung der Erfindung ist die Zusatzgaszuführung zu zumindest zwei Kaskadenstufen parallel zur Gaszuführung geführt. Diese beiden Kaskadenstufen können somit von der Gaszuführung seriell mit Betriebsgas versorgt werden, wobei zusätzlich eine parallele Versorgung dieser beiden Kaskadenstufen zur Vermeidung von Druckeinbrüchen erfolgen kann. Zweckmäßigerweise ist die Zusatzgaszuführung zu den zumindest zwei Kaskadenstufen auch in sich parallel geführt, so dass beide Kaskadenstufen jeweils separat zusätzlich beliefert werden können.

Vorteilhafterweise ist auch die letzte Kaskadenstufe, die zumindest eine Spülzelle aufweist, mit der Zusatzgaszuführung verbunden. Auf diese Weise kann die für Lasteinbrüche kritischste Kaskadenstufe mit zusätzlichem Betriebsgas aus der Zusatzgaszuführung versorgt werden.

In einer weiteren vorteilhaften Ausgestaltung der Erfindung wird vorgeschlagen, dass die Zusatzgaszuführung unter Umgehung einer Kaskadenstufe zu einer weiter nachfolgenden Kaskadenstufe geführt ist. Auf diese Weise kann Betriebsgas unmittelbar von beispielsweise einem Befeuchter zu einer für Lasteinbrüche kritischen Kaskadenstufe unter Umgehung der zumindest einen Kaskadenstufe geführt werden. Insbesondere ist die Zusatzgaszuführung von einer Kaskadenstufe unter Umgebung der nächstfolgenden Kaskadenstufe zu einer weiter nachfolgenden Kaskadenstufe geführt, so dass eine für die Wasserabführung kritische Kaskadenstufe umgangen werden kann.

Gemäß einer bevorzugten Ausführungsform verbindet die Zusatzgaszuführung eine nachfolgende Kaskadenstufe mit einer Frischgaszuleitung. Unter Frischgas wird in diesem Zusammenhang unverbrauchtes Betriebsgas verstanden, also Betriebsgas, das noch durch keine Kaskadenstufe geströmt ist. Hierdurch wird frisches Betriebsgas zu dieser Kaskadenstufe geführt, was insbesondere bei einer Spülzelle den Vorteil hat, dass diese besonders beanspruchte Zelle mit einer guten Leistung betrieben und gründlich gespült werden kann. Hierdurch kann eine Unterversorgung zuverlässig vermieden und eine Erhöhung der Lebensdauer der Spülzellen erreicht werden.

In einer anderen Ausgestaltung der Erfindung verbindet die Zusatzgaszuführung eine Gasableitung einer Kaskadenstufe mit einer Gaszuleitung einer nachfolgenden Kaskadenstufe. Durch die Zusatzgaszuführung strömen somit auch Reste von Betriebsgas, das in einer vorhergehenden Kaskadenstufe bereits teilweise verbraucht wurde. Hierdurch bleibt der Vorteil der Kaskadierung, nämlich die gute Ausnutzung des Betriebsgases, erhalten.

Vorteilhafterweise ist die Zusatzgaszuführung seriell zu zumindest zwei Kaskadenstufen geführt. Hierdurch können diese Kaskadenstufen, unter Erhalt der kaskadierten Betriebsgaszuführung, mit zusätzlichem Betriebsgas versorgt werden.

Vorteilhafterweise verbindet die Zusatzgaszuführung auch eine Spülzelle aufweisende letzte Kaskadenstufe mit einer Frischgaszuleitung, wodurch diese besonders empfindlich gegen eine Unterversorgung reagierende Brennstoffzelle zuverlässig und schonend betrieben werden kann.

Eine weitere Ausführungsform der Erfindung sieht vor, dass die Brennstoffzellenvorrichtung einen Betriebsgasbefeuchter und ein Trockengas zum Betriebsgasbefeuchter zuleitende Trockengasleitung aufweist, wobei die Zusatzgaszuführung die Trockengasleitung mit zumindest einer Kaskadenstufe, insbesondere einer nachfolgenden Kaskadenstufe, verbindet. Hierdurch kann trockenes Betriebsgas unter Umgehung des Betriebsgasbefeuchters zu der Kaskadenstufe geleitet werden, wodurch eine Regeneration von durch Wasser beanspruchten Brennstoffzellen ermöglicht wird. Unter Trockengas wird in diesem Zusammenhang unbefeuchtetes Betriebsgas verstanden.

Ein zuverlässiges Öffnen und Schließen der Zusatzgaszuführung kann erreicht werden, wenn die Brennstoffzellenvorrichtung eine Steuereinheit zum betriebssituationsbedingten Öffnen und insbesondere Schließen der Zusatzgaszuführung aufweist. Die Steuereinheit kann hierfür mit einem Sensor verbunden sein, der einen entsprechenden Betriebsparameter misst und anhand dessen Signals die Steuereinheit, die vorzugsweise als elektronische Steuereinheit ausgeführt ist, ein Öffnen oder Schließen der Zusatzgaszuführung veranlasst.

Eine solche Betriebssituation kann durch einen niedrigen Druck von Betriebsgas in einem Bauteil der Brennstoffzellenvorrichtung gekennzeichnet sein. Alternativ oder zusätzlich ist es möglich, dass die Steuereinheit dazu vorgesehen ist, die Zusatzgaszuführung bei einem ein vorgegebenes Maß überschreitenden Lastwechsel zu öffnen. Ein kritischer Betriebszustand kann hierdurch bereits vor seinem Eintreten vermieden werden, beispielsweise dadurch, dass bei dem großen Lastwechsel bereits zusätzliches Betriebsgas durch die Zusatzgaszuführung in eine Kaskadenstufe geleitet wird, bevor dort ein Druckabfall eintritt.

Ist die Steuereinheit dazu vorgesehen, die Zusatzgaszuführung bei einem gestörten Betriebsablauf zu öffnen, kann eine solche Störung des Betriebsablaufs schnell beseitigt werden, ohne dass Brennstoffzellen beeinträchtigt werden oder ein Zellspannungsalarm ausgelöst wird.

Eine Betriebsstörung kann einfach und sehr zuverlässig vermieden werden, wenn die Brennstoffzellenvorrichtung einen Drucksensor zum Bestimmen eines Betriebsgasdrucks aufweist, wobei die Steuereinheit dazu vorgesehen ist, die Zusatzgaszuführung bei Unterschreiten des Betriebsgasdrucks unter einen vorbestimmten Wert zu öffnen. Eine sich anbahnende Unterversorgung von Brennstoffzellen mit Betriebsgas kann zuverlässig erkannt und durch eine zweckmäßigerweise sofortige Einspeisung von Betriebsgas durch die Zusatzgaszuführung in betroffene Brennstoffzellen bzw. eine betroffene Kaskadenstufe vermieden werden.

Vorteilhafterweise ist der Drucksensor zum Messen eines Betriebsgasdrucks in einem Wasserabscheider vorgesehen. Wird durch eine hohe Auslastung der Wasserabführung mit Wasser ein Durchströmen dieser Wasserabführung mit Betriebsgas verhindert, so bildet sich im nachfolgenden Wasserabscheider ein Unterdruck, da die nachfolgende Kaskadenstufe Betriebsgas aus dem Wasserabscheider heraussaugt. Durch das Messen des Betriebsgasdrucks im Wasserabscheider kann hiermit eine Unterversorgung der Kaskadenstufe mit Betriebsgas zuverlässig erkannt werden.

Ein betriebsbedingtes Öffnen und Schließen der Zusatzgaszuführung kann besonders einfach und preiswert realisiert werden, wenn die Zusatzgaszuführung ein selbstregelndes, mechanisches Ventil aufweist. Das beispielsweise auf eine Druckdifferenz reagierende Ventil kann bei entsprechenden Drücken selbstständig öffnen und schließen, wodurch keine elektronische oder sonst wie geartete Steuereinheit notwendig ist.

Eine einfache Realisierung eines solchen Ventils wird durch ein Überströmventil erreicht. Bei einem Unterdruck in einer Kaskadenstufe oder einem Wasserabscheider kann das Druckgefälle zum selbsttätigen Öffnen des Überströmventils genutzt werden, dessen Öffnungsdifferenzdruck zweckmäßigerweise mechanisch einstellbar ist. Lässt der Differenzdruck nach, so kann durch das Überströmventil der Gasstrom des durch die Zusatzgaszuführung strömenden Betriebsgases selbstständig angepasst werden.

In einer anderen Ausführungsform weist die Zusatzgaszuführung ein Druckregelventil auf. Hierdurch kann ein vorbestimmter Druck in einer oder mehreren Kaskadenstufen durch eine entsprechende Einstellung des Druckregelventils aufrecht erhalten bleiben, auch wenn die Zuführung von Betriebsgas durch die Gaszuführung behindert ist.

Die Erfindung wird von Ausführungsbeispielen näher erläutert, die in den Zeichnungen dargestellt sind. Es zeigen:
- FIG 1: eine Brennstoffzellenvorrichtung mit vier Kaskadenstufen, von denen die letzten drei parallel mit einer Zusatzgaszuführung verbunden sind,
- FIG 2: eine Brennstoffzellenvorrichtung, bei der die letzten drei Kaskadenstufen über eine mechanisch geregelte Zusatzgaszuführungen versorgt werden können und
- FIG 3: eine Brennstoffzellenvorrichtung, bei der die letzten drei Kaskadenstufen über eine serielle Zusatzgaszuführung versorgt werden können.

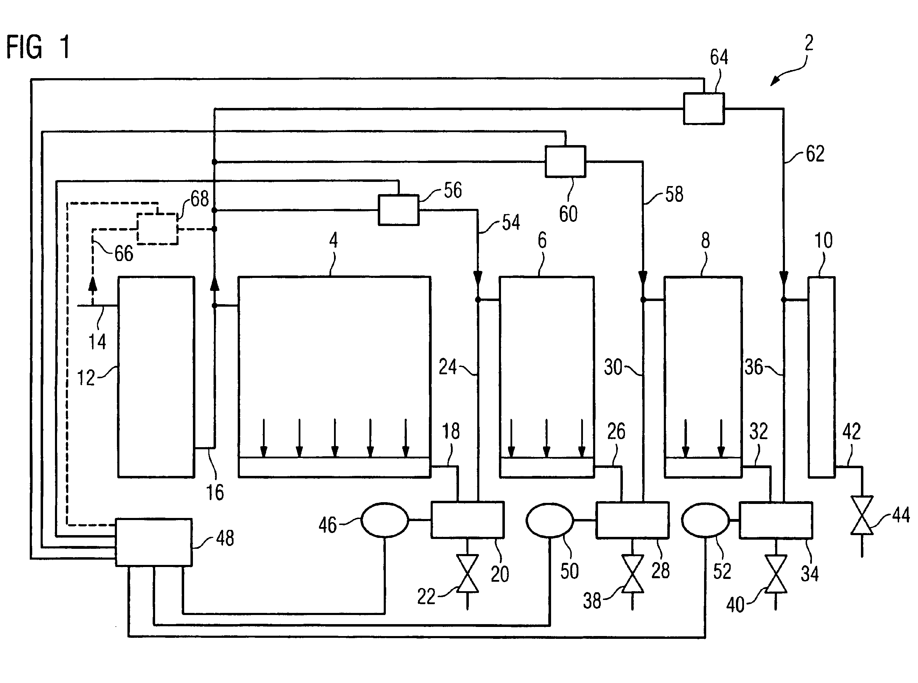

FIG 1 zeigt eine Brennstoffzellenvorrichtung 2 mit vier kaskadiert angeordneten Kaskadenstufen 4, 6, 8, 10, von denen die Kaskadenstufe 4 die erste Kaskadenstufe und die Kaskadenstufen 6, 8, 10 nachfolgende Kaskadenstufen sind. Die erste Kaskadenstufe 4 umfasst eine Vielzahl von Brennstoffzellen, die zu einem Brennstoffzellenblock zusammengefügt sind. Die zweite Kaskadenstufe 6 umfasst weit weniger, ebenfalls zu einem Brennstoffzellenblock zusammengefügte Brennstoffzellen, und die dritte Kaskadenstufe 8 umfasst noch weniger Brennstoffzellen. Die letzte Kaskadenstufe 10 umfasst lediglich acht als Spülzellen ausgeführte Brennstoffzellen, in denen sich Inertgase, sonstige nicht verbrauchbare Gasbestandteile und Wasser sammeln.

Der ersten Kaskadenstufe 4 bezüglich eines Betriebsgasstroms vorgeschaltet ist ein Betriebsgasbefeuchter 12 zur Befeuchtung des Betriebsgases, das über eine Trockengasleitung 14 in den Betriebsgasbefeuchter 12 einströmt. Über eine Frischgaszuleitung 16 wird das befeuchtete Betriebsgas der ersten Kaskadenstufe 4 zugeführt. Dort wird das Betriebsgas teilweise verbraucht, wobei durch die chemische Reaktion von Wasserstoff (H₂) und Sauerstoff (O₂) an den Membranen der Brennstoffzellen, die als PEM-Brennstoffzellen ausgeführt sind (Polymer Elektrolyt Membran Brennstoffzellen oder Proton Exchange Membrane Brennstoffzellen), zu Wasser.

Dieses Wasser sammelt sich zusammen mit auskondensiertem Befeuchtungswasser unten in der ersten Kaskadenstufe 4 und läuft durch eine Wasserabführung 18 in einen Wasserabscheider 20. In dem Wasserabscheider 20 ist ein nicht dargestellter Niveaugeber, der bei einem Überschreiten des Wasserpegels über ein vorgegebenes Niveau ein Ventil 22 zur Entwässerung der Wasserabscheiders 20 öffnet.

Zur Unterstützung des Wasseraustrags aus der ersten Kaskadenstufe 4 ist zusätzlich zum Wasser auch der Betriebsgasstrom durch die Wasserabführung 18 in den Wasserabscheider 20 geführt. Auf diese Weise wird das sich in der Kaskadenstufe 4 ansammelnde Wasser durch den Betriebsgasstrom aus der Kaskadenstufe 4 ausgeblasen. Der Betriebsgasstrom durchströmt den Wasserabscheider 20 und wird durch eine weitere Gaszuführung 24 der nächsten Kaskadenstufe 6 zugeleitet. Dort wird wiederum ein Teil des Betriebsgases in den Brennstoffzellen verbraucht und es sammelt sich Wasser, das durch eine weitere Wasserabführung 26 einem weiteren Wasserabscheider 28 zugeführt wird. Analog zur Wasserabführung 18 dient auch die Wasserabführung 26 als Gaszuführung 30 zur Leitung des Betriebsgases von der Kaskadenstufe 6 durch den Wasserabscheider 28 zur nächsten Kaskadenstufe 8, wodurch das Wasser aus der Kaskadenstufe 6 in den Wasserabscheider 28 geblasen wird.

Bis auf ihre Größe ist die Kaskadenstufe 8 mit einer Wasserabführung 32, einem Wasserabscheider 34 und einer die Wasserabführung 32 umfassenden Gaszuführung 36 zur letzten Kaskadenstufe 10 analog aufgebaut wie die Kaskadenstufe 6. Mit Hilfe eines Niveaugebers und Ventilen 38, 40 sind die Wasserabscheider 28, 34 entleerbar. In der letzten Kaskadenstufe 10 wird das Betriebsgas weitestmöglich verbraucht, wobei sich in der Kaskadenstufe 10 Inertgase und nicht verbrauchbare Anteile des Betriebsgases sowie Wasser sammeln. Wird der Betrieb der als Spülzellen ausgeführten Brennstoffzellen durch diese Bestandteile zu sehr beeinträchtigt, wird eine Spülleitung 42 durch ein Ventil 44 geöffnet, so dass diese Anteile durch den in den Kaskadenstufen 4, 6, 8, 10 herrschenden leichten Überdruck gegenüber der Umgebung herausgedrückt und die Spülzellen hierdurch gespült werden, so dass Raum für brauchbare Anteile des Betriebsgases in den Spülzellen entsteht.

Die Gaszuführungen 24, 30, 36 können zusammen mit der Frischgaszuleitung 16 auch als eine einzige Gaszuführung zu allen Kaskadenstufen 4, 6, 8, 10 der Brennstoffzellenvorrichtung 2 verstanden werden. Diese führt ein Betriebsgas zu den Kaskadenstufen 4, 6, 8, 10, beispielsweise Wasserstoff oder ein wasserstoffhaltiges Betriebsgas. Aus Gründen der Übersichtlichkeit ist eine zweite Gaszuführung zu den Kaskadenstufen 4, 6, 8, 10 für das andere Betriebsgas, beispielsweise Sauerstoff oder Luft, nicht dargestellt, wobei die Zuführung für beide Betriebsgase zu den Kaskadenstufen 4, 6, 8, 10 analog aufgebaut ist.

Bei einem plötzlichen Lastsprung von einer niedrigen Last zu einer weit höheren Last wird sprunghaft mehr Betriebsgas in zunächst die erste Kaskadenstufe 4 und dann die nachfolgenden Kaskadenstufen 6, 8, 10 eingeblasen. Hierdurch wird verstärkt Produktwasser und/oder Kondenswasser von den Brennstoffzellen oder sonstigen Bestandteilen von zunächst der Kaskadenstufe 4 abgeblasen, so dass der Gasstrom eine größere Menge Wasser vor sich her treibt. Dieses Wasser kann wie eine Welle die Wasserabführung 18 erreichen und ausfüllen, so dass der Strom des Betriebsgases durch die Wasserabführung 18 zum Wasserabscheider 20 behindert ist. Hierdurch wird weniger Betriebsgas in den Wasserabscheider 20 eingebracht als die nachfolgenden Kaskadenstufen 6, 8, 10 verbrauchen und aus dem Wasserabscheider 20 heraussaugen. Im Wasserabscheider 20 entsteht ein Unterdruck.

Zur Messung des Betriebsgasdrucks im Wasserabscheider 20 umfasst die Brennstoffzellenvorrichtung 2 einen Drucksensor 46, der mit einer elektronischen Steuereinheit 48 signaltechnisch verbunden ist. In gleicher Weise ist die Steuereinheit 48 mit weiteren Drucksensoren 50, 52 verbunden, die zur Bestimmung eines Betriebsgasdrucks in den Wasserabscheidern 28 bzw. 34 vorgesehen sind. Unterschreitet der Betriebsgasdruck im Wasserabscheider 20 einen vorbestimmten Wert, so wird diese Unterschreitung von der Steuereinheit 48 registriert. Der vorbestimmte Druck im Wasserabscheider 20 kann der statische Druck im Wasserabscheider 20 bei Nennlast der Brennstoffzellenvorrichtung 2 sein.

Zur Behebung einer solchen Betriebsstörung weist die Brennstoffzellenvorrichtung 2 eine Zusatzgaszuführung 54 vom Betriebsgasbefeuchter 12 zur zweiten Kaskadenstufe 6 auf, die durch ein Ventil 56, das durch ein Signal der Steuereinheit geöffnet und geschlossen werden kann, zu öffnen bzw. verschließbar ist. Bei einer solchen Betriebsstörung wird durch die Steuereinheit 48 ein entsprechendes Signal an das Ventil 56 gegeben, das die Zusatzgaszuführung 54 öffnet. Hierdurch strömt Frischgas aus der Frischgaszuleitung 16 bzw. den Betriebsgasbefeuchter 12 unter Umgehung der ersten Kaskadenstufe 4 direkt in die zweite Kaskadenstufe 6, so dass trotz der blockierten Wasserabführung 18 nur ein kurzfristiger und sehr geringfügiger Druckabfall in der Kaskadenstufe 6 auftritt.

Der durch die Frischgaszuleitung bewirkte Druckanstieg im Wasserabscheider 20 wird auch vom Drucksensor 46 registriert, der ein entsprechendes Signal an die Steuereinheit 48 sendet. Dieses Signal kann von der Steuereinheit 48 zur weiteren Steuerung des Ventils 56 verwendet werden, beispielsweise zu einem teilweisen oder vollständigen Schließen des Ventils 56 sofort nach Erhalt des entsprechenden Signals vom Drucksensor 46 oder nach einer vorbestimmten Wartezeit, um dem Wasser aus der Kaskadenstufe 4 eine Weile Zeit zu geben, vollständig oder zumindest weitgehend den Wasserabscheider 20 zu erreichen und die Wasserabführung 18 freizugeben.

Durch die Frischgaszuleitung zur Kaskadenstufe 6 wird diese vom Betriebsgas in erhöhtem Maße durchströmt, so dass auch hier ein hoher Wasseraustrag stattfinden kann. Zur Vermeidung eines Unterdrucks in der nachfolgenden Kaskadenstufe 8 durch eine Blockierung der Wasserabführung 26 durch das aus der Kaskadenstufe 6 ausgetragene Wasser umfasst die Brennstoffzellenvorrichtung eine weitere Zusatzgaszuführung 58 von der Frischgaszuleitung 16 bzw. dem Betriebgasbefeuchter 12 direkt zur Kaskadenstufe 8. Analog zur Zusatzgaszuführung 54 ist auch die Zusatzgaszuführung 58 mit einem Ventil 60 versehen, das signaltechnisch mit der Steuereinheit 48 verbunden ist und zu einem von der Steuereinheit 48 gesteuerten Öffnen und Schließen der Zusatzgaszuführung 48 vorgesehen ist.

Eine dritte Zusatzgaszuführung 62 mit einem Ventil 64 verbindet die Frischgaszuleitung 16 bzw. den Betriebsgasbefeuchter 12 mit der letzten Kaskadenstufe 10, so dass auch diese Kaskadenstufe unabhängig von der kaskadierten Betriebsgaszuführung zu den Kaskadenstufen 4, 6, 8, 10 unmittelbar mit Frischgas beliefert werden kann.

Durch die Zusatzgaszuführungen 54, 58, 62, die auch als eine einzige zusammenhängende Zusatzgaszuführung bezeichnet werden können, kann - parallel zu den seriellen Gaszuführungen 24, 30, 36 - parallel zu den Kaskadenstufen 6, 8, 10 Betriebsgas zugeführt werden, jeweils unter Umgehung der jeweiligen Wasserabführung 18, 26, 32. Hierbei wird durch die Zusatzgaszuführung 54 die Kaskadenstufe 4 umgangen, durch die Zusatzgaszuführung 58 die Kaskadenstufen 4 und 6 und durch die Zusatzgaszuführung 62 die Kaskadenstufen 4, 8 und 6. Durch die Zusatzgaszuführung 62 werden die besonders empfindlichen Spülzellen in der letzten Kaskadenstufe 10 direkt mit der Frischgaszuleitung 16 verbunden, so dass die Spülzellen mit einem guten Ergebnis betrieben und insbesondere unabhängig von dem Betriebsgasstrom durch die Gaszuführungen 18, 24, 30, 36 gründlich gespült werden können, um einen zuverlässigen Betrieb der als Spülzellen ausgeführten Brennstoffzellen zu gewährleisten.

Zusätzlich zu dem betriebsbedingten Öffnen der Zusatzgaszuführungen 54, 58 und/oder 62 durch einen Unterdruck in den betreffenden Wasserabscheidern 20, 28, 34 kann die Steuereinheit 48 dazu ausgebildet sein, aus einem anderen Grund Frischgas zu den Kaskadenstufen 6, 8, 10 zu führen, beispielsweise zur Erhöhung der Leistung der Brennstoffzellen dieser Kaskadenstufen 6, 8, 10 oder zum effektiven Spülen der letzten Kaskadenstufe 10. So ist es auch denkbar, dass die Steuereinheit 48 eines oder mehrere der Ventile 56, 60, 64 öffnet, wenn die Brennstoffzellenvorrichtung einen über ein vorgegebenes Maß gehenden Lastwechsel durchfährt, um eine Betriebsstörung oder einen Unterdruck in einer der Wasserabscheider 20, 28, 34 bzw. Kaskadenstufen 6, 8, 10 von vornherein zu unterbinden. Außerdem ist es möglich, zur kurzfristigen Erhöhung der Leistung der Brennstoffzellenvorrichtung bei einem solchen großen Lastwechsel zusätzliches Frischgas in die Kaskadenstufen 6, 8, 10 einzuspeisen.

In einer alternativen Ausführungsform umfasst die Brennstoffzellenvorrichtung 2 eine weitere Zusatzgaszuführung 66, die die Trockengasleitung 14 unmittelbar mit einem oder mehreren der Kaskadenstufen 4, 6, 8, 10 verbindet. Zum selektiven Öffnen der Zusatzgaszuführung 66 kann diese mit einem Ventil 68 versehen sein, das durch die Steuereinheit 48 zu öffnen und zu schließen ist. Hierdurch kann zusätzlich zu dem von dem Betriebsgasbefeuchter stammenden Frischgas Trockengas zu den Kaskadenstufen 4, 6, 8, 10 geleitet werden, um diese von einer zu großen Befeuchtung zu regenerieren. Auch die Zusatzgaszuführung 66 kann mit den Zusatzgaszuführungen 54, 58, 62 als eine einzige Zusatzgaszuführung betrachtet werden.

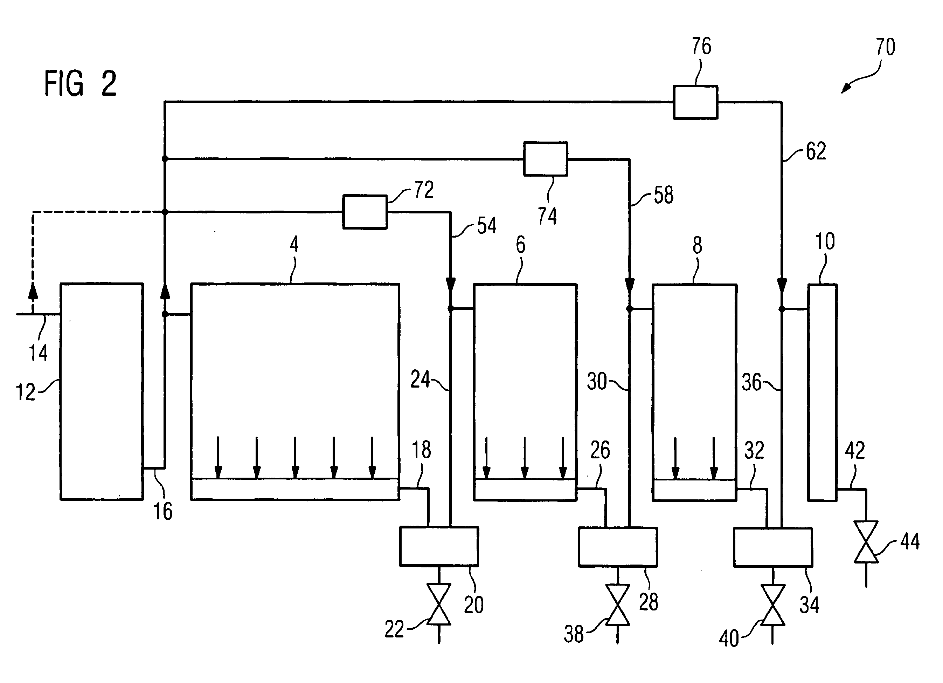

In FIG 2 ist eine weitere Brennstoffzellenvorrichtung 70 dargestellt. Die nachfolgende Beschreibung beschränkt sich im Wesentlichen auf die Unterschiede zum Ausführungsbeispiel in FIG 1, auf das bezüglich gleichbleibender Merkmale und Funktionen verwiesen wird. Im Wesentlichen gleichbleibende Bauteile sind grundsätzlich mit den gleichen Bezugszeichen beziffert.

Wie die Brennstoffzellenvorrichtung 2 umfasst auch die Brennstoffzellenvorrichtung 70 die Zusatzgaszuführungen 54, 58, 62, jedoch mit mechanisch selbstregelnden Ventilen 72, 74, 76. Diese Ventile 72, 74, 76 sind als Überströmventile ausgeführt, die oberhalb eines an jedem Ventil 72, 74, 76 manuell einstellbaren Differenzdrucks öffnen. Dieser Differenzdruck kann der Differenzdruck sein, der bei einem regulären Betrieb der Brennstoffzellenvorrichtung 70 bei Nennlast, also ohne einen Lastwechsel, an den Ventilen 72, 74, 76 anliegt.

Auf diese Weise kann gewährleistet werden, dass der Druck in den Kaskadenstufen 6, 8, 10 nicht unter einen durch den Druck im Betriebsgasbefeuchter 12 und eine entsprechende Einstellung an den Ventilen 72, 74, 76 vorgegebenen Druck fällt.

Auch bei einem kritisch hohen Lastwechsel bleibt somit eine genügende Betriebsgasversorgung zu den Kaskadenstufen 6, 8, 10 erhalten.

In einer alternativen Ausführungsform sind die Ventile 72, 74, 76 als Druckregelventile ausgeführt, deren Ausgangsdruck manuell eingestellt werden kann. Auf diese Weise kann ein voreingestellter Druck in den Kaskadenstufen 6, 8, 10 gewährleistet werden, der eine störungsfreie Betriebsgaszufuhr zu den Kaskadenstufen 6, 8, 10 gewährleistet.

Selbstverständlich ist es auch denkbar, die Zusatzgaszuführungen 54, 58, 62 mit einer Kombination aus Überströmventilen, Druckregelventilen und/oder über die Steuereinheit 48 und Drucksensoren 46, 50, 52 angesteuerte Ventilen auszustatten, so dass die Zusatzgaszuführungen 54, 58, 62 beispielsweise unterschiedlich ausgestattet sind, so dass ein voreingestellter absoluter, ein relativer oder ein elektronisch steuerbarer Betriebsgasdruck in den Kaskadenstufen 6, 8, 10 gewährleistet ist.

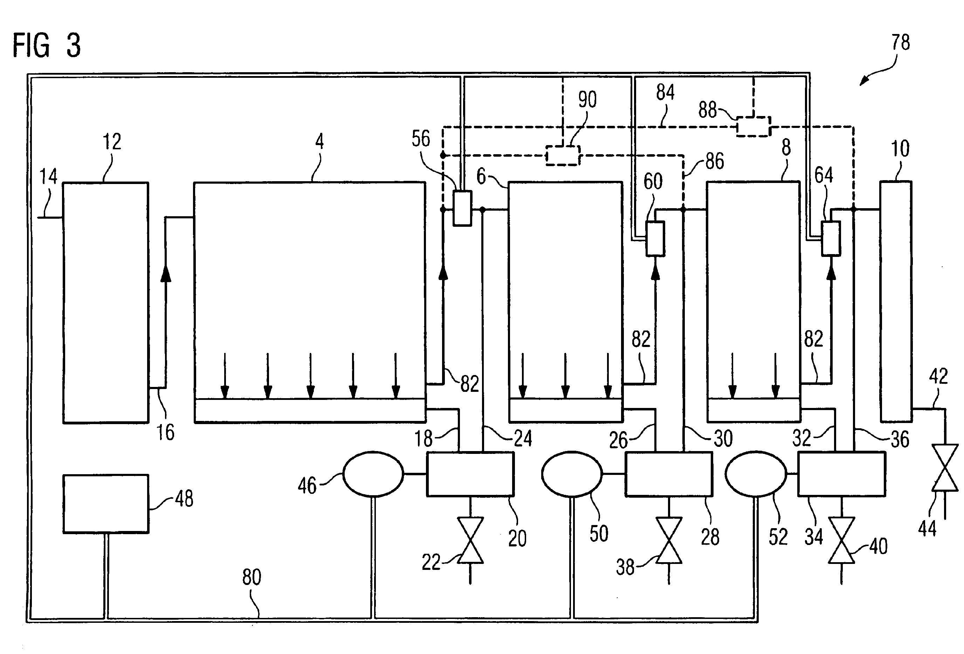

Ein weiteres Ausführungsbeispiel einer Brennstoffzellenvorrichtung 78 ist in FIG 3 gezeigt. Wie die oben beschriebenen Brennstoffzellenvorrichtungen 2, 70 umfasst auch diese Brennstoffzellenvorrichtung 78 vier Kaskadenstufen 4, 6, 8, 10 mit entsprechenden Wasserabscheidern 20, 28, 34, Ventilen 22, 38, 40 und Drucksensoren 46, 50, 52, die jedoch über eine Bus-Leitung 80 mit der Steuereinheit 48 verbunden sind. Ebenfalls über diese Bus-Leitung 80 sind die Ventile 56, 60, 64 mit der Steuereinheit 48 verbunden. Zusätzlich verfügt diese Brennstoffzellenvorrichtung 78 über eine Zusatzgaszuführung 82, die seriell von der Kaskadenstufe 4 zur Kaskadenstufe 6, von dort zur Kaskadenstufe 8 und von dort zur Kaskadenstufe 10 geführt ist.

In Gegensatz zu den Zusatzgaszuführungen 54, 58, 62 wird durch die serielle Zusatzgaszuführung 82 kein Frischgas zu den Kaskadenstufen 6, 8, 10 geführt, sondern es bleibt die kaskadierte Betriebsgaszuführung erhalten. Hierfür verbindet die Zusatzgaszuführung 82 jeweils eine Gasableitung einer Kaskadenstufe 4, 6, 8 mit einer Gaszuleitung der jeweils nachfolgenden Kaskadenstufe 6, 8, 10. Um ein Verstopfen der Zusatzgaszuführung 82 mit Wasser zu verhindern, zweigt diese jeweils an einer solchen Stelle aus der betreffenden Kaskadenstufe 4, 6, 8 ab, an die das Wasser nicht hin fließt, so dass die Zusatzgaszuführung 82 - außer von etwas Kondenswasser - nicht mit Wasser durchströmt wird.

Um eine zügige und/oder zusätzliche Betriebsgaszuführung zu den Kaskadenstufen 8, 10 zu ermöglichen, kann in einer weiteren Ausgestaltung der Brennstoffzellenvorrichtung 78 eine weitere Zusatzgaszuführung 84 und optional eine weitere Zusatzgaszuführung 86 vorgesehen sein. Durch diese kann eine oder zwei Kaskadenstufen 6, 8 umgangen werden, so dass zusätzlich zur seriellen Führung der Zusatzgaszuführung 82 eine parallele Führung von Betriebsgas zu den Kaskadenstufen 8, 10 ermöglicht wird. Zur entsprechenden Steuerung des Betriebsgasstroms sind die Zusatzgaszuführungen 84, 86 mit von der Steuereinheit 48 ansteuerbaren Ventilen 88, 90 versehen. Auf diese Weise kann unter guter Betriebsgasausnutzung durch die serielle Betriebsgasführung ein unerwünschter Unterdruck in den Kaskadenstufen 6, 8, 10 und eine erhöhte Spülung der Kaskadenstufe 10 auch bei einem starken Lastwechsel gewährleistet werden.

## Patentansprüche

1. Brennstoffzellenvorrichtung (2,70,78) mit mehreren Kaskadenstufen (4,6,8,10) und einer von einer vorhergehenden Kaskadenstufe (4) zu zumindest einer nächsten und einer übernächsten Kaskadenstufe (6,8,10) geführten Gaszuführung (24,30,36) für ein Betriebsgas, die zumindest teilweise mit einer Wasserabführung (18,26,32) zum Abführen von Wasser aus der vorhergehenden Kaskadenstufe (4,6,8) gemeinsam geführt ist, **gekennzeichnet durch** eine zusätzliche, die Wasserabführung (18,26,32) umgehende Zusatzgaszuführung (54,58,62,66,82,84,86) für das gleiche Betriebsgas zu zumindest der der vorhergehenden Kaskadenstufe (4) nachfolgenden und der übernächsten Kaskadenstufe (8,10) vorhergehenden nächsten Kaskadenstufe (6).

2. Brennstoffzellenvorrichtung (2, 70, 78) nach Anspruch 1, **dadurch gekennzeichnet, dass** die Zusatzgaszuführung (82) zu zumindest zwei Kaskadenstufen (6, 8, 10) parallel zur Gaszuführung (24, 60, 36) geführt ist.

3. Brennstoffzellenvorrichtung (2, 70, 78) nach einem der vorhergehenden Ansprüche, **dadurch gekennzeichnet, dass** die Zusatzgaszuführung (54, 58, 64, 84, 86) unter Umgehung einer Kaskadenstufe (4, 6, 8) zu einer weiter nachfolgenden Kaskadenstufe (6, 8, 10) geführt ist.

4. Brennstoffzellenvorrichtung (2, 70) nach einem der vorhergehenden Ansprüche, **dadurch gekennzeichnet, dass** die Zusatzgaszuführung (54, 58, 62, 84, 86) eine nachfolgende Kaskadenstufe (6, 8, 10) mit einer Frischgaszuleitung (16) verbindet.

5. Brennstoffzellenvorrichtung (78) nach einem der vorhergehenden Ansprüche, **dadurch gekennzeichnet, dass** die Zusatzgaszuführung (82) eine Gasableitung einer Kaskadenstufe (4, 6, 8) mit einer Gaszuleitung einer nachfolgenden Kaskadenstufe (6, 8, 10) verbindet.

6. Brennstoffzellenvorrichtung (78) nach einem der vorhergehenden Ansprüche, **dadurch gekennzeichnet, dass** die Zusatzgaszuführung (82) seriell zu zumindest zwei Kaskadenstufen (6, 8, 10) geführt ist.

7. Brennstoffzellenvorrichtung (2, 70) nach einem der vorhergehenden Ansprüche, **dadurch gekennzeichnet, dass** die Zusatzgaszuführung (62, 84) eine eine Spülzelle aufweisende letzte Kaskadenstufe (10) mit einer Frischgaszuleitung (16) verbindet.

8. Brennstoffzellenvorrichtung (2, 70) nach einem der vorhergehenden Ansprüche, **gekennzeichnet durch** einen Betriebsgasbefeuchter (12) und eine Trockengas zum Betriebsgasbefeuchter (12) zuleitende Trockengasleitung (14), wobei die Zusatzgaszuführung (54, 58, 62, 66) die Trockengasleitung (14) mit zumindest einer Kaskadenstufe (6, 8, 10) verbindet.

9. Brennstoffzellenvorrichtung (2, 78) nach einem der vorhergehenden Ansprüche, **gekennzeichnet durch** eine Steuereinheit (48) zum betriebssituationsbedingten Öffnen der Zusatzgaszuführung (54, 58, 62, 66, 82, 84, 86).

10. Brennstoffzellenvorrichtung (2, 78) nach Anspruch 9, **dadurch gekennzeichnet, dass** die Steuereinheit (48) dazu vorgesehen ist, die Zusatzgaszuführung (54, 58, 62, 66, 82, 84, 86) bei einem ein vorgegebenes Maß überschreitenden Lastwechsel zu öffnen.

11. Brennstoffzellenvorrichtung (2, 78) nach Anspruch 9 oder 10, **dadurch gekennzeichnet, dass** die Steuereinheit (48) dazu vorgesehen ist, die Zusatzgaszuführung (54, 58, 62, 66, 82, 84, 86) bei einem gestörten Betriebsablauf zu öffnen.

12. Brennstoffzellenvorrichtung (2, 78) nach der Ansprüche 9 bis 11, **gekennzeichnet durch** einen Drucksensor (46, 50, 52) zum Bestimmen eines Betriebsgasdrucks, wobei die Steuereinheit (48) dazu vorgesehen ist, die Zusatzgaszuführung (54, 58, 62, 66, 82, 84, 86) bei Unterschreiten des Betriebsgasdrucks unter einen vorbestimmten Wert zu öffnen.

13. Brennstoffzellenvorrichtung (2, 78) nach Anspruch 12, **dadurch gekennzeichnet, dass** der Drucksensor (46, 50, 52) zum Messen eines Betriebsgasdrucks in einem Wasserabscheider (20, 28, 52) vorgesehen ist.

14. Brennstoffzellenvorrichtung (70) nach einem der vorhergehenden Ansprüche, **dadurch gekennzeichnet, dass** die Zusatzgaszuführung (54, 58, 62) ein selbstregelndes, mechanisches Ventil (72, 74, 76) aufweist.

15. Brennstoffzellenvorrichtung (70) nach einem der vorhergehenden Ansprüche, **dadurch gekennzeichnet, dass** die Zusatzgaszuführung (54, 58, 62) ein Überströmventil aufweist.

16. Brennstoffzellenvorrichtung (70) nach einem der vorhergehenden Ansprüche, **dadurch gekennzeichnet, dass** die Zusatzgaszuführung (54, 58, 62) ein Druckregelventil aufweist.

## Claims

1. Fuel cell apparatus (2, 70, 78) having a plurality of cascade steps (4, 6, 8, 10) and having a gas supply (24, 30, 36), which leads from a previous cascade step (4) to at least one next and one next-but-one cascade step (6, 8, 10), for an operating gas, at least part of which is passed jointly out of the previous cascade step (4, 6, 8) with a water outlet (18, 26, 32) for carrying out water, **characterized by** an additional gas supply (54, 58, 62, 66, 82, 84, 86), which bypasses the water outlet (18, 26, 32), for the same operating gas to at least that next cascade step (6) which follows the previous cascade step (4) and precedes the next-but-one cascade step (8, 10).

2. Fuel cell apparatus (2, 70, 78) according to Claim 1, **characterized in that** the additional gas supply (82) is passed to at least two cascade steps (6, 8, 10) in parallel with the gas supply (24, 60, 36).

3. Fuel cell apparatus (2, 70, 78) according to one of the preceding claims, **characterized in that** the additional gas supply (54, 58, 62, 84, 86) is passed to a further downstream cascade step (6, 8, 10), bypassing a cascade step (4, 6, 8).

4. Fuel cell apparatus (2, 70) according to one of the preceding claims, **characterized in that** the additional gas supply (54, 58, 62, 84, 86) connects a downstream cascade step (6, 8, 10) to a fresh gas supply line (16).

5. Fuel cell apparatus (78) according to one of the preceding claims, **characterized in that** the additional gas supply (82) connects a gas outlet from a cascade step (4, 6, 8) to a gas supply for a downstream cascade step (6, 8, 10).

6. Fuel cell apparatus (78) according to one of the preceding claims, **characterized in that** the additional gas supply (82) is passed in series to at least two cascade steps (6, 8, 10).

7. Fuel cell apparatus (2, 70) according to one of the preceding claims, **characterized in that** the additional gas supply (62, 84) connects a last cascade step (10), which has a purging cell, to a fresh gas supply line (16).

8. Fuel cell apparatus (2, 70) according to one of the preceding claims, **characterized by** an operating gas moisturizer (12) and a dry gas line (14) which supplies dry gas to the operating gas moisturizer (12), with the additional gas supply (54, 58, 62, 66) connecting the dry gas line (14) to at least one cascade step (6, 8, 10).

9. Fuel cell apparatus (2, 78) according to one of the preceding claims, **characterized by** a control unit (48) for opening the additional gas supply (54, 58, 62, 66, 82, 84, 86) as a function of the operating situation.

10. Fuel cell apparatus (2, 78) according to Claim 9, **characterized in that** the control unit (48) is provided in order to open the additional gas supply (54, 58, 62, 66, 82, 84, 86) in the event of a load change which exceeds a predetermined level.

11. Fuel cell apparatus (2, 78) according to Claim 9 or 10, **characterized in that** the control unit (48) is provided for opening the additional gas supply (54, 58, 62, 66, 82, 84, 86) in the event of a faulty operating process.

12. Fuel cell apparatus (2, 78) according to Claims 9 to 11, **characterized by** a pressure sensor (46, 50, 52) for determination of an operating gas pressure, with the control unit (48) being provided for opening the additional gas supply (54, 58, 62, 66, 82, 84, 86) if the operating gas pressure falls below a predetermined value.

13. Fuel cell apparatus (2, 78) according to Claim 12, **characterized in that** the pressure sensor (46, 50, 52) is provided for measuring an operating gas pressure in a water separator (20, 28, 52).

14. Fuel cell apparatus (70) according to one of the preceding claims, **characterized in that** the additional gas supply (54, 58, 62) has a self-regulating, mechanical valve (72, 74, 76).

15. Fuel cell apparatus (70) according to one of the preceding claims, **characterized in that** the additional gas supply (54, 58, 62) has an overflow valve.

16. Fuel cell apparatus (70) according to one of the preceding claims, **characterized in that** the additional gas supply (54, 58, 62) has a pressure regulating valve.

## Revendications

1. Dispositif ( 2, 70, 78 ) de piles à combustible ayant plusieurs étages ( 4, 6, 8, 10 ) en cascade et un conduit ( 24, 30, 36 ) pour un gaz de fonctionnement allant d'un étage ( 4 ) en cascade précédent à au moins un étage ( 6, 8, 10 ) en cascade immédiatement suivant et à un étage immédiatement après l'étage suivant, conduit qui passe conjointement au moins en partie avec une évacuation ( 185, 26, 32 ) d'eau pour évacuer l'eau de l'étage ( 4, 6, 8 ) en cascade précédent, **caractérisé par** un conduit ( 54, 58, 62, 66, 82, 84, 86 ) de gaz supplémentaire, contournant l'évacuation ( 18, 26, 32 ) d'eau, destiné au même gaz de fonctionnement et allant au moins à l'étage ( 6 ) en cascade suivant l'étage ( 4 ) en cascade précédent et précédant l'étage ( 8, 10 ) en cascade venant immédiatement après.

2. Dispositif ( 2, 70, 78 ) de piles à combustible suivant la revendication 1, **caractérisé en ce que** le conduit ( 82 ) supplémentaire pour du gaz va à au moins deux étages ( 6, 8, 10 ) en cascade parallèlement au conduit ( 24, 60, 36 ) pour du gaz.

3. Dispositif ( 2, 70, 78 ) de piles à combustible suivant l'une des revendications précédentes, **caractérisé en ce que** le conduit ( 54, 58, 62, 84, 86 ) supplémentaire pour du gaz va, en contournant un étage ( 4, 6, 8 ) en cascade, à un autre étage ( 6, 8, 10 ) en cascade venant plus loin ensuite.

4. Dispositif ( 2, 70 ) de piles à combustible suivant l'une des revendications précédentes, **caractérisé en ce que** le conduit ( 54, 58, 62, 84, 86 ) supplémentaire pour du gaz fait communiquer un étage ( 6, 8, 10 ) en cascade suivant avec un conduit ( 16 ) d'entrée de gaz frais.

5. Dispositif ( 78 ) de piles à combustible suivant l'une des revendications précédentes, **caractérisé en ce que** le conduit ( 82 ) de gaz supplémentaire fait communiquer une évacuation de gaz d'un étage ( 4, 6, 8 ) en cascade avec un conduit d'entrée de gaz d'un étage ( 6, 8, 10 ) en cascade suivant.

6. Dispositif ( 78 ) de piles à combustible suivant l'une des revendications précédentes, **caractérisé en ce que** le conduit ( 82 ) supplémentaire d'entrée de gaz va en série à au moins deux étages ( 6, 8, 10 ) en cascade.

7. Dispositif ( 2, 70 ) de piles à combustible suivant l'une des revendications précédentes, **caractérisé en ce que** le conduit ( 62, 84 ) supplémentaire pour du gaz fait communiquer un dernier étage ( 10 ) en cascade ayant une cellule de lavage avec un conduit ( 16 ) d'entrée de gaz frais.

8. Dispositif ( 2, 70 ) de piles à combustible suivant l'une des revendications précédentes, **caractérisé par** un humidificateur ( 12 ) de gaz de fonctionnement et par un conduit ( 14 ) amenant du gaz sec à l'humidificateur de gaz de fonctionnement, le conduit ( 54, 58, 62, 66 ) supplémentaire pour du gaz faisant communiquer le conduit ( 14 ) pour du gaz sec avec au moins un étage ( 6, 8, 10 ) en cascade.

9. Dispositif ( 2, 78 ) de piles à combustible suivant l'une des revendications précédentes, **caractérisé par** une unité ( 48 ) de commande pour ouvrir en fonction de la situation de fonctionnement le conduit ( 54, 58, 62, 66, 82, 84, 86 ) supplémentaire pour du gaz.

10. Dispositif ( 2, 78 ) de piles à combustible suivant la revendication 9, **caractérisé en ce que** l'unité ( 48 ) de commande est prévue pour ouvrir le conduit ( 54, 58, 62, 66, 82, 84, 86 ) supplémentaire pour du gaz lors d'un changement de charge dépassant une valeur prescrite.

11. Dispositif ( 2, 78 ) de piles à combustible suivant la revendication 9 ou 10, **caractérisé en ce que** l'unité ( 48 ) de commande est prévue pour ouvrir le conduit ( 54, 58, 62, 66, 82, 84, 86 ) supplémentaire pour du gaz lorsque le déroulement du fonctionnement est perturbé.

12. Dispositif ( 2, 70, 78 ) de piles à combustible suivant les revendications 9 à 11, **caractérisé par** un capteur ( 46, 50, 52 ) de pression pour déterminer une pression de gaz de fonctionnement, l'unité ( 48 ) de commande étant prévue pour ouvrir le conduit ( 54, 58, 62, 66, 82, 84, 86 ) supplémentaire pour du gaz lorsque la pression du gaz de fonctionnement devient inférieure à une valeur déterminée à l'avance.

13. Dispositif ( 2, 78 ) de piles à combustible suivant la revendication 10, **caractérisé en ce que** le capteur ( 46, 50, 52 ) de pression est prévu pour mesurer une pression du gaz de fonctionnement dans un séparateur ( 20, 28, 52 ) d'eau.

14. Dispositif ( 70 ) de piles à combustible suivant l'une des revendications précédentes, **caractérisé en ce que** le conduit ( 54, 58, 62 ) supplémentaire pour du gaz a une vanne ( 72, 74, 76 ) mécanique se réglant de soi-même.

15. Dispositif ( 70 ) de piles à combustible suivant l'une des revendications précédentes, **caractérisé en ce que** le conduit ( 54, 58, 62 ) supplémentaire pour du gaz a une soupape de décharge.

16. Dispositif ( 70 ) de piles à combustible suivant l'une des revendications précédentes, **caractérisé en ce que** le conduit ( 54, 58, 62 ) supplémentaire pour du gaz a une soupape de réglage de la pression.
